# EUROPÄISCHE PATENTSCHRIFT

(11) **EP 0 816 170 B1**
(45) Veröffentlichungstag und Bekanntmachung des Hinweises auf die Patenterteilung: **14.11.2001**
(21) Anmeldenummer: 97110346.0
(22) Anmeldetag: 25.06.1997
(51) Int. Cl.: B60Q 3/02

(54) **Beleuchtungseinrichtung für einen Innenraum**
Interior lighting device
Dispositif d'éclairage intérieur

(30) Priorität: 29.06.1996 DE 19626172
(43) Veröffentlichungstag der Anmeldung: 07.01.1998
(73) Patentinhaber: Hella KG Hueck & Co., 59552 Lippstadt (DE)
(72) Erfinder: Decker, Detlef, 59558 Lippstadt (DE); Wördenweber, Burkhard, Dr., 59557 Lippstadt (DE)

(56) Entgegenhaltungen:
- US-A- 2 082 124
- US-A- 2 229 203
- US-A- 2 595 858

## Beschreibung

Die Erfindung betrifft eine Beleuchtungseinrichtung für einen Innenraum, beispielsweise von Kraftfahrzeugen, mit einer Lichtquelle und einem in einem den Innenraum überbrückenden Abstand gegenüberliegenden Reflektor.

Aus der DE 602 523 ist eine Beleuchtungseinrichtung für das Innere von Kraftfahrzeugen bekannt. Im oberen Teil des Innenraumes ist eine Lichtquelle angeordnet, die ihre Strahlen im wesentlichen nur in waagerechter Richtung aussendet, wobei die Strahlen von dem als Reflektor wirkenden Wandteil nach unten abgelenkt werden, das die Seitenwand mit dem Dach verbindet und geneigt oder gekrümmt verläuft. Der als Wandteil ausgebildete Reflektor hat den Nachteil, daß er einerseits nicht veränderbar ist und nur diffuses Licht erzeugt und andererseits die Geometrie des Innenraumes bestimmt.

Aus der DE 44 06 458 ist eine Beleuchtungseinrichtung zur indirekten Raumbeleuchtung bekannt. Von einer im Raum befindlichen Lichtquelle treffen Lichtstrahlen in steilem Winkel auf einen aufgehängten Reflektor und werden in den Raum umgelenkt. Auch diese Beleuchtungseinrichtung besitzt den Nachteil, daß sie nicht für unterschiedliche Funktionen geeignet ist.

Aufgabe der vorliegenden Erfindung ist es daher, eine Beleuchtungseinrichtung zu schaffen, die für unterschiedliche Funktionen mit unterschiedlichen Lichtbündelungen bzw. unterschiedlicher Lichtverteilung genutzt werden kann.

Diese Aufgabe wird erfindungsgemäß dadurch gelöst, daß der Reflektor als Reflektoreinheit mit mehreren Reflektoren ausgebildet ist, die einzeln in einen Strahlengang der Lichtquelle bringbar sind.

Die Beleuchtungseinrichtung hat den Vorteil, daß eine Lichtquelle für verschiedene Funktionen genutzt werden kann. Für die einzelnen unterschiedlichen Funktionen muß lediglich der entsprechende Reflektor in den Strahlengang der Lichtquelle gebracht werden. Die Beleuchtungseinrichtung kann somit kostengünstig zur multifunktionalen Beleuchtung des Innenraumes eingesetzt werden.

In einer vorteilhaften Ausgestaltung der Erfindung ist die Lichtquelle in vertikaler Richtung im unteren Bereich des Innenraumes eines Fahrzeuges, beispielsweise in der Mittelkonsole eines Kompakt-PKW's, angeordnet. Dabei ist der Strahlengang der Lichtquelle als etwa paralleles Lichtbündel in etwa vertikaler Richtung nach oben zum Fahrzeughimmel gerichtet, wo er auf einen in den Strahlengang geschobenen Reflektor trifft und entsprechend dessen Oberflächengestaltung in den Raum umgelenkt wird. Ein diffuses Licht erzeugender Reflektor wird beispielsweise zur Innenraumbeleuchtung genutzt, und einen gerichteten Lichtkegel auf einen bestimmten Platz aussendender Reflektor wird als Leseleuchte für diesen Platz verwendet. Die unterschiedlichen Reflektoren sind auf einem Drehteller angeordnet, so daß durch Drehen des Drehtellers ein Reflektor in den Strahlengang der Lichtquelle geschoben wird. Es ist aber auch möglich, die Reflektoren nebeneinander auf einer längs verschieblichen Grundplatte anzuordnen. Obwohl letztendlich der Innenraum von oben her bestrahlt wird, kann auf elektrische Leitungen im Fahrzeughimmel verzichtet werden. Die Lichtquelle ist in einem Bereich angeordnet, der ohnehin mit elektrischen Leitungen versorgt wird. Der Verkabelungsaufwand sinkt erheblich, es wird eine kostengünstige und doch variable Lösung zur Beleuchtung des Innenraumes erreicht.

Nach einer weiteren vorteilhaften Ausgestaltung ist die Reflektoreinheit gegenüber dem Innenraum durch eine Abdeckung abgedeckt, wobei die Abdeckung im Bereich des in den Strahlengang gebrachten Reflektors lichtdurchlässig ist. Dadurch wird erreicht, daß die Reflektoren geschützt sind, nicht verschmutzen und bei einer Reinigung des Fahrzeughimmels nicht beschädigt werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

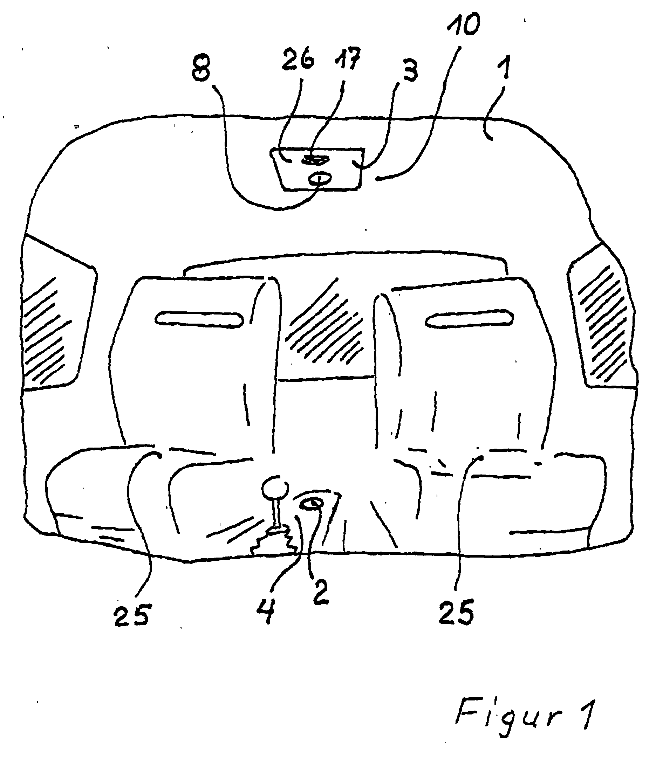

- Figur 1: eine Vorderansicht eines Fahrzeuginnenraumes im Ausschnitt mit Beleuchtungseinrichtung,

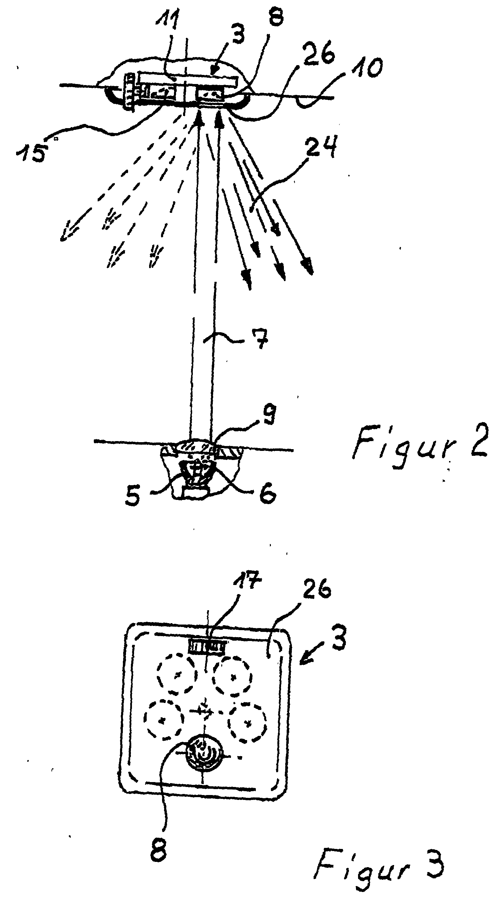

- Figur 2: eine Seitenansicht einer Beleuchtungseinrichtung in schematischer Darstellung,
- Figur 3: eine Draufsicht auf eine Reflektoreinheit,

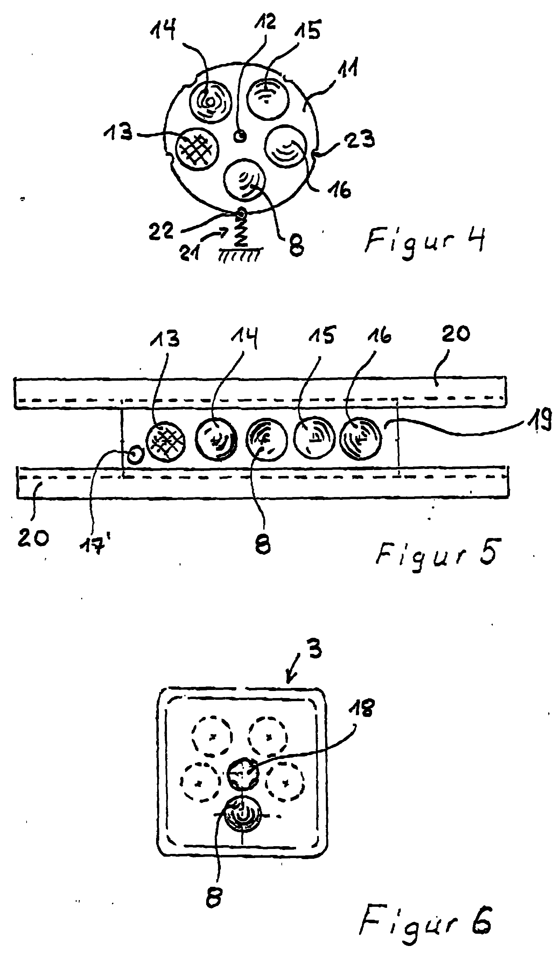

- Figur 4: eine Draufsicht auf einen Drehteller mit Reflektoren,
- Figur 5: eine in Schienen verschiebliche Grundplatte mit Reflektoren und
- Figur 6: eine Draufsicht auf eine weitere Reflektoreinheit.

Eine Beleuchtungseinrichtung für einen Kraftfahrzeuginnenraum (1) besteht aus einer Lichtquelle (2) und einer Reflektoreinheit (3).

Die Lichtquelle (2) ist in die Mittelkonsole (4) des Fahrzeuges versenkt eingebaut. Die Lichtquelle (2) weist an ihrer der Mittelkonsole (4) zugewandten Rückseite einen Lampenreflektor (5) auf, der das Licht der Lampe (6) weitgehend bündelt und in einen etwa parallelen Strahlengang (7) auf einen Reflektor (8) der Reflektoreinheit (3) projiziert. Die Lichtquelle (2) ist zu ihrer der Rückseite gegenüberliegenden Vorderseite durch eine transparente Lampenabdeckung (9) abgedeckt. Die Lampenabdeckung (9) kann auch als Linse ausgebildet sein.

Die Reflektoreinheit (3) ist gegenüber der Lichtquelle (2) an einem Fahrzeughimmel (10) angeordnet. Die Reflektoreinheit (3) besteht im wesentlichen aus einem Drehteller (11), der um seine Achse (12) drehbar ist. Auf der der Lichtquelle (2) zugewandten Seite des Drehtellers (11) sind fünf Reflektoren (8, 13, 14, 15, 16) angeordnet. Durch einen seitlich des Drehtellers (11) angeordneten Betätigungsknopf (17), der mit dem Drehteller (11) über ein Reibrad oder ein Zahnrad verbunden ist, läßt sich der Drehteller (11) drehen. Es ist aber auch möglich, einen Drehknopf (18) so auf dem Drehteller (11) anzuordnen, daß seine Mittelachse mit der Drehachse des Drehtellers (11) zusammenfällt.

Nach einer anderen Ausgestaltung wird anstelle des Drehtellers (11) eine quer zum Strahlengang (7) der Lichtquelle (2) verschiebliche Grundplatte (19) angeordnet. Die Grundplatte (19) ist zwischen zwei an ihren Längsseiten angeordneten Schienen (20) mit Hilfe eines Betätigungsknopfes (17') verschiebbar. An der Reflektoreinheit (3) ist eine Rastung (21) angeordnet, so daß der jeweils in den Strahlengang (7) zu bringende Reflektor (8, 13, 14, 15, 16) in seiner vorgesehenen Position einrastet. Die Rastung (21) kann beispielsweise als eine federbelastete Kugel (22) ausgebildet sein, die in eine entsprechende Nut (23) des Drehtellers (11) bzw. der Grundplatte (19) einrastet.

Der Reflektor (8) ist in seiner Reflektorfläche so ausgebildet, daß er das eingestrahlte Licht diffus reflektiert und als Innenleuchte wirkt. Die Reflektorflächen anderer Reflektoren (13, 14, 15, 16) sind so ausgebildet, daß sie einen Lichtkegel (24) erzeugen, der auf jeweils einen der im Innenraum (1) angeordneten Plätze ausgerichtet ist, so daß diese Reflektoren (13, 14, 15, 16) als Leseleuchten geeignet sind. Es ist aber auch möglich, einen der Reflektoren (8, 13, 14, 15, 16) in seiner Reflektionsfläche so auszubilden, beispielsweise durch eine Zweiteilung, daß er zwei Plätze gleichzeitig als Leseleuchte ausleuchtet.

Die Reflektoreinheit (3) ist zum Innenraum hin durch eine Abdeckung (26) abgedeckt. Im Bereich des in den Strahlengang (7) gebrachten Reflektors (8) ist die Abdeckung (26) lichtdurchlässig. Die Lichtdurchlässigkeit der Abdeckung (26) kann auch durch eine Öffnung, die den in den Strahlengang (7) eingeschobenen Reflektor (8) freigibt, erreicht werden.Die Abdeckung (26) kann auch Teil des Fahrzeughimmels (10) sein.

Nach Einschalten der Lichtquelle (2) mittels eines nicht dargestellten Schalters wird über den Betätigungsknopf (17, 17') der gewünschte Reflektor (8, 13, 14, 15, 16) so weit in den Strahlengang (7) gebracht, daß er in der vorgesehenen Position einrastet.

## Patentansprüche

1. Beleuchtungseinrichtung für einen Innenraum (1), beispielsweise von Kraftfahrzeugen, mit einer Lichtquelle (2) und einem in einem den Innenraum überbrückenden Abstand gegenüberliegenden Reflektor, **dadurch gekennzeichnet, daß** der Reflektor als Reflektoreinheit (3) mit mehreren Reflektoren (8, 13, 14, 15, 16) ausgebildet ist, die einzeln in einen Strahlengang (7) der Lichtquelle (2) bringbar sind.

2. Beleuchtungseinrichtung nach Anspruch 1, **dadurch gekennzeichnet, daß** die Lichtquelle (2) im in vertikaler Richtung unteren Bereich des Innenraumes (1) angeordnet ist.

3. Beleuchtungseinrichtung nach Anspruch 2, **dadurch gekennzeichnet, daß** die Lichtquelle (2) im Bereich einer Mittelkonsole (4) angeordnet ist.

4. Beleuchtungseinrichtung nach einem oder mehreren der Ansprüche 1 bis 3, **dadurch gekennzeichnet, daß** die Reflektoreinheit (3) im in vertikaler Richtung oberen Bereich des Innenraumes (1) angeordnet ist.

5. Beleuchtungseinrichtung nach Anspruch 4, **dadurch gekennzeichnet, daß** die Reflektoreinheit (3) am gegenüber der Mittelkonsole (4) befindlichen Fahrzeughimmel (10) angeordnet ist.

6. Beleuchtungseinrichtung nach einem oder mehreren der Ansprüche 1 bis 5, **dadurch gekennzeichnet, daß** die Reflektoreinheit (3) einen Drehteller (11) aufweist, auf dem unterschiedlich reflektierende Reflektoren (8, 13, 14, 15, 16) im Kreis angeordnet sind.

7. Beleuchtungseinrichtung nach Anspruch 6, **dadurch gekennzeichnet, daß** der Drehteller (11) über einen Betätigungsknopf (17) drehbar ist.

8. Beleuchtungseinrichtung nach Anspruch 6 oder 7, **dadurch gekennzeichnet, daß** der Drehteller (11) jeweils in einer in den Strahlengang (7) eingeschwenkten Reflektorposition einrastbar ist.

9. Beleuchtungseinrichtung nach einem oder mehreren der Ansprüche 1 bis 5, **dadurch gekennzeichnet, daß** die Reflektoreinheit (3) eine quer zum Strahlengang (7) der Lichtquelle (2) verschiebliche Grundplatte (19) aufweist, auf der unterschiedlich reflektierende Reflektoren (8, 13, 14, 15, 16) angeordnet sind.

10. Beleuchtungseinrichtung nach Anspruch 9, **dadurch gekennzeichnet, daß** die Grundplatte (19) über einen Betätigungsknopf (17') verschiebbar ist.

11. Beleuchtungseinrichtung nach Anspruch 9 oder 10, **dadurch gekennzeichnet, daß** die Grundplatte (19) jeweils in einer in den Strahlengang (7) gebrachten Reflektorposition einrastbar ist.

12. Beleuchtungseinrichtung nach einem oder mehreren der Ansprüche 1 bis 11, **dadurch gekennzeichnet, daß** die Reflektoreinheit (3) gegenüber dem Innenraum (1) durch eine Abdeckung (26) abgedeckt ist, die im Bereich des in dem Strahlengang (7) gebrachten Reflektors (8) lichtdurchlässig ist.

13. Beleuchtungseinrichtung nach Anspruch 12, **dadurch gekennzeichnet, daß** die Abdeckung (26) im Bereich des Strahlenganges (7) der Lichtquelle (2) eine Öffnung aufweist, die den in den Strahlengang (7) eingebrachten Reflektor (8) freigibt.

14. Beleuchtungseinrichtung nach einem oder mehreren der Ansprüche 1 bis 13, **dadurch gekennzeichnet, daß** einer der Reflektoren (8, 13, 14, 15, 16) das eingestrahlte Licht als Innenleuchte diffus reflektiert.

15. Beleuchtungseinrichtung nach einem oder mehreren der Ansprüche 1 bis 14, **dadurch gekennzeichnet, daß** mindestens einer der Reflektoren (8, 13, 14, 15, 16) als Leseleuchte für einen Platz (25) ausgebildet ist.

16. Beleuchtungseinrichtung nach Anspruch 15, **dadurch gekennzeichnet, daß** weitere Reflektoren (8, 13, 14, 15, 16) für weitere Plätze (25) angeordnet sind.

17. Beleuchtungseinrichtung nach einem oder mehreren der Ansprüche 1 bis 16, **dadurch gekennzeichnet, daß** einer der Reflektoren (8, 13, 14, 15, 16) als Leseleuchte für zwei Plätze (25) ausgebildet ist.

## Claims

1. Lighting system for an interior space (1), for example the interior of a motor ' vehicle, having a light source (2) and a reflector lying opposite at a distance across the interior, **characterized in that** the reflector takes the form of a reflector unit (3) having a plurality of reflectors (8, 13, 14, 15, 16), which can be brought separately into a beam path (7) of the light source (2).

2. Lighting system according to Claim 1, **characterized in that** the light source (2) is disposed, in relation to a vertical line, in the lower region of the interior (1).

3. Lighting system according to Claim 2, **characterized in that** the light source (2) is disposed in the region of a central control panel (4).

4. Lighting system according to one or more of Claims I to 3, **characterized in that** the reflector unit (3) is disposed, in relation to a vertical line, in the upper region of the interior (1).

5. Lighting system according to Claim 4, **characterized in that** the reflector unit (3) is disposed on the vehicle's inside roof lining (10) opposite the central control panel (4).

6. Lighting system according to one or more of Claims 1 to 5, **characterized in that** the reflector unit (3) has a turntable (11), on which variously reflecting reflectors (8, 13, 14, 15, 16) are disposed in a circle.

7. Lighting system according to Claim 6, **characterized in that** the turntable (11) can be turned by way of a control knob (17).

8. Lighting system according to Claim 6 or 7, **characterized in that** the turntable (11) can be locked into position when the appropriate reflector has been swivelled into the beam path.

9. Lighting system according to one or more of Claims 1 to 5, **characterized in that** the reflector unit (3) has a base plate (19) which can be displaced at right angles to the beam path (7) of the light source (2), variously reflecting reflectors (8, 13, 14, 15, 16) being disposed on said base plate (19).

10. Lighting system according to Claim 9, **characterized in that** the base plate (19) can be displaced by way of a control knob (17').

11. Lighting system according to Claim 9 or 10, **characterized in that** the base plate (19) can be locked into position when the appropriate reflector has been brought into the beam path.

12. Lighting system according to one or more of Claims 1 to 11, **characterized in that** the reflector unit (3) is screened from the interior space (1) by a cover (26), which is transparent in the region of the reflector (8) brought into the beam path (7).

13. Lighting system according to Claim 12, **characterized in that** the cover (26) has an opening in the region of the beam path (7) of the light source (2), said opening clearing the way for the reflector (8) brought into the beam path (7).

14. Lighting system according to one or more of Claims 1 to 13, **characterized in that** one of the reflectors (8, 13, 14, 15, 16) diffusely reflects the incident light as an interior light.

15. Lighting system according to one or more of Claims 1 to 14, **characterized in that** at least one of the reflectors (8, 13, 14, 15, 16) is designed as a reading light for one seat (25).

16. Lighting system according to Claim 15, **characterized in that** additional reflectors (8, 13, 14, 15, 16) are provided for other seats (25).

17. Lighting system according to one or more of Claims 1 to 16, **characterized in that** one of the reflectors (8, 13, 14, 15, 16) is designed as a reading light for two seats (25).

## Revendications

1. Dispositif d'éclairage pour un espace intérieur (1), par exemple de véhicules automobiles, comportant une source lumineuse (2) et un réflecteur situé à l'opposé à une distance enjambant l'espace intérieur, **caractérisé en ce que** le réflecteur est réalisé sous forme d'unité à réflecteurs (3) comportant plusieurs réflecteurs (8, 13, 14, 15, 16) qui sont susceptibles d'être amenés individuellement dans une trajectoire des rayons (7) de la source lumineuse (2).

2. Dispositif d'éclairage selon la revendication 1, **caractérisé en ce que** la source lumineuse (2) est agencée dans la région inférieure, en direction verticale, de l'espace intérieur.

3. Dispositif d'éclairage selon la revendication 2, **caractérisé en ce que** la source lumineuse (2) est agencée dans la région d'une console médiane (4).

4. Dispositif d'éclairage selon l'une ou plusieurs des revendications 1 à 3, **caractérisé en ce que** l'unité à réflecteurs (3) est agencée dans la région supérieure, en direction verticale, de l'espace intérieur.

5. Dispositif d'éclairage selon la revendication 4, **caractérisé en ce que** l'unité à réflecteurs (3) est agencée sur le ciel de véhicule (10) se trouvant à l'opposé de la console médiane (4).

6. Dispositif d'éclairage selon l'une ou plusieurs des revendications 1 à 5, **caractérisé en ce que** l'unité à réflecteurs (3) présente une plaque tournante (11) sur laquelle des réflecteurs à réflexions différentes (8, 13, 14, 15, 16) sont agencés en cercle.

7. Dispositif d'éclairage selon la revendication 6, **caractérisé en ce que** la plaque tournante (11) est rotative par l'intermédiaire d'un bouton d'actionnement (17).

8. Dispositif d'éclairage selon l'une ou l'autre des revendications 6 et 7, **caractérisé en ce que** la plaque tournante (11) est enclenchable dans une position de réflecteur respective pivotée dans la trajectoire des rayons (7).

9. Dispositif d'éclairage selon l'une ou plusieurs des revendications 1 à 5, **caractérisé en ce que** l'unité à réflecteurs (3) présente une plaque de base (19) déplaçable transversalement par rapport à la trajectoire des rayons (7) de la source lumineuse (2), sur laquelle sont agencés des réflecteurs à réflexions différentes (8, 13, 14, 15, 16).

10. Dispositif d'éclairage selon la revendication 9, **caractérisé en ce que** la plaque de base (19) est déplaçable au moyen d'un bouton d'actionnement (17').

11. Dispositif d'éclairage selon l'une ou l'autre des revendications 9 et 10, **caractérisé en ce que** la plaque de base (19) est enclenchable dans une position de réflecteur respective amenée dans la trajectoire des rayons (7).

12. Dispositif d'éclairage selon l'une ou plusieurs des revendications 1 à 11, **caractérisé en ce que** l'unité à réflecteurs (3) est recouverte vis-à-vis de l'espace intérieur (1) par un cache (26) qui est translucide dans la région du réflecteur (8) amené dans la trajectoire des rayons (7).

13. Dispositif d'éclairage selon la revendication 12, **caractérisé en ce que** le cache (26) présente dans la région de la trajectoire des rayons (7) de la source lumineuse (2) une ouverture qui libère le réflecteur (8) amené dans la trajectoire des rayons (7).

14. Dispositif d'éclairage selon l'une ou plusieurs des revendications 1 à 13, **caractérisé en ce qu'**un des réflecteurs (8, 13, 14, 15, 16) réfléchit de manière diffuse la lumière irradiée comme un éclairage intérieur.

15. Dispositif d'éclairage selon l'une ou plusieurs des revendications 1 à 14, **caractérisé en ce qu'**au moins un des réflecteurs (8, 13, 14, 15, 16) est réalisé sous forme de liseuse pour une place (25).

16. Dispositif d'éclairage selon la revendication 15, **caractérisé en ce que** d'autres réflecteurs (8, 13, 14, 15, 16) sont agencés pour d'autres places (25).

17. Dispositif d'éclairage selon la revendication 15, **caractérisé en ce que** l'un des réflecteurs (8, 13, 14, 15, 16) est réalisé sous forme de liseuse pour deux places (25).
